# EUROPÄISCHE PATENTANMELDUNG

(11) **EP 2 353 394 A1**
(43) Veröffentlichungstag der Anmeldung: **10.08.2011**
(21) Anmeldenummer: 10002159.1
(22) Anmeldetag: 03.03.2010
(51) Int. Cl.: A22C 13/00

(54) **Verfahren zum Trocknen von Schlauchhüllen durch Mikrowellen**

(30) Priorität: 10.02.2010 DE 102010007658
(71) Anmelder: CaseTech GmbH, 29699 Bomlitz (DE)
(72) Erfinder: Fuhrmann, Hartmut, 29664 Walsrode (DE); Willers, Andreas, 29664 Walsrode (DE)
(74) Vertreter: Polypatent

(57) **Zusammenfassung**

Die vorliegende Erfindung betrifft ein Verfahren zum Trocknen von Schlauchhüllen durch Mikrowellen, insbesondere zum Trocknen von beschichteten oder unbeschichteten Nahrungsmittelhüllen, sowie die Verwendung von Mikrowellen zum Trocknen derartiger Hüllen. Ferner betrifft die Erfindung eine integrierte Anlage zum Herstellen und Trocknen durch Mikrowellen von Schlauchhüllen.

## Beschreibung

Die vorliegende Erfindung betrifft ein Verfahren zum Trocknen von Schlauchhüllen durch Mikrowellen, insbesondere zum Trocknen von beschichteten oder unbeschichteten Nahrungsmittelhüllen, sowie die Verwendung von Mikrowellen zum Trocknen derartiger Hüllen. Ferner betrifft die Erfindung eine integrierte Anlage zum Herstellen und Trocknen durch Mikrowellen von Schlauchhüllen.

Schlauchhüllen allgemein, inklusive der hier vorzugsweise betrachteten Nahrungsmittelhüllen, können nach unterschiedlichen Verfahren hergestellt werden. Im Falle von Nahrungsmittelhüllen, insbesondere bei Wursthüllen, spricht man auch von Kunstdärmen. Verschiedene Herstellungsverfahren für Kunstdärme sind bekannt. So können diese aus Cellulosehydrat, aus Echtpergament, aus eiweißbeschichtetem Gewebegerüst, aus Collagen oder auch aus Kunststoff hergestellt werden.

Bei den Därmen auf Cellulosebasis unterscheidet man zwischen homogen aus Cellulose hergestellten Därmen und solchen, die mit nassverfestigten Fasern verstärkt werden, so genannte Faserdärme. Des Weiteren gibt es auch Faserdärme mit einer zusätzlich aufgebrachten PVDC-Schicht, welche bei bestimmten Anwendungen Vorteile bietet. Eine Übersicht über die verschiedenen Herstellungsvarianten von Kunstdärmen findet sich in "Wursthüllen Kunstdarm", Kapitel 4, "Herstellung des Kunstdarmes", Seiten 47 bis 63, Deutscher Fachverlag, 2006.

In all den oben genannten Verfahren findet an ein oder mehreren Stellen des Herstellungsprozesses ein Trocknungsschritt statt. Zum Beispiel gibt es typischerweise zwei Trocknungsschritte im Trockenspinnverfahren bei der Herstellung von Collagendarm. Beim Nassspinnverfahren, welches sich verfahrenstechnisch bei der Herstellung von Collagendarm und Cellulosedarm ähnelt, findet, bevor der jeweilige Darm aufgewickelt wird, in der Regel ein abschließender Trocknungsschritt statt (vgl. "Wursthüllen Kunstdarm", Kapitel 4, "Herstellung des Kunstdarmes", Seiten 47 bis 63, Deutscher Fachverlag, 2006.

Die einzelnen Trocknungsschritte bei den verschiedenen Herstellungsprozessen können jeweils auf unterschiedliche Weise erfolgen. Typische Trocknungsverfahren arbeiten mit heißer Luft, wobei die Luft zum Beispiel über Gasbrenner erhitzt werden kann, die dann auf den durchlaufenden Darm geblasen wird.

Die herkömmlich genutzten Trocknungsverfahren haben jedoch oft bedeutsame Nachteile. So erfolgt die Trocknung durch heiße Luft an dem jeweiligen Kunstdarmabschnitt von außen nach innen, d. h. die warme Luft erwärmt den Kunstdarm zunächst von außen, was zu einer Verdunstung der Feuchtigkeit führt und setzt sich dann nach innen fort. Damit einher geht eine zeitliche Verzögerung bis die inneren Schichten des Kunstdarmes erwärmt sind und zu trocknen beginnen können. Um die zeitliche Verzögerung auszugleichen wäre es zwar denkbar, die Temperatur weiter zu erhöhen, dies könnte jedoch zu einer lokalen Überhitzung der äußeren Schichten führen, was ebenfalls nachteilig für den Kunstdarm sein könnte. Beispielsweise kann der lokal überhitzte Kunstdarm bei der Weiterverarbeitung zu Abschnitten und Raffware nicht ausreichend flexibel sein und mechanisch beschädigt werden. Dies kann bei der Wurstherstellung zu Platzern führen. Zudem kann überhitzter Kunstdarm schlechtere Schrumpfeigenschaften und reduzierte Durchlässigkeiten bei der Herstellung von Rohwurst aufweisen. Um hier ein gutes und sicheres Trocknungsergebnis zu erzielen, sind Hersteller gezwungen, die Geschwindigkeit der durchlaufenden Kunstdarmbahn zu reduzieren. Dies führt natürlich zu einer geringeren Produktionskapazität einer Kunstdarmanlage. Es hat sich gezeigt, dass tatsächlich bei der Kunstdarmherstellung die Trocknungsschritte limitierend für den Ausstoß der Fertigware ist.

Für die Hersteller von Kunstdärmen besteht somit ein Bedarf, den Trocknungsschritt zu beschleunigen und somit das genannte "Nadelöhr" zu beseitigen. Gleichzeitig soll die Trocknung materialschonend und auch unter Energieeinsatz-Aspekten günstig sein.

Aufgabe der vorliegenden Erfindung war es also, ein schnelleres und besseres Trocknungsverfahren für Schlauchhüllen, insbesondere für Nahrungsmittelhüllen, die nach einem Nassdarm-Verfahren hergestellt werden, bereitzustellen.

Diese Aufgabe wird in erfindungsgemäßer Weise gelöst durch das in den Ansprüchen 1 bis 11 spezifizierte Verfahren, durch eine in den Ansprüchen 12 bis 14 definierte Anlage und durch die in den Ansprüchen 15 und 16 genannte Verwendung.

Gegenstand der Erfindung ist somit zunächst ein Verfahren zum Trocknen von Schlauchhüllen, dadurch gekennzeichnet, dass die zu trocknende Schlauchhülle durch eine Mikrowellen erzeugende Mikrowellenanlage geführt wird.

Gemäß erfindungsgemäßem Verfahren ist es bevorzugt, dass die zu trocknende Schlauchhülle eine beschichtete oder unbeschichtete Nahrungsmittelhülle ist. Dabei kann entweder eine unbeschichtete feuchte Nahrungsmittelhülle, eine feuchte Beschichtung einer an sich nicht feuchten Nahrungsmittelhülle oder eine mit einer feuchten Beschichtung versehenen feuchten Nahrungsmittelhülle durch die Mikrowellen der Mikrowellenanlage getrocknet werden.

Besonders bevorzugte Schlauchhüllen, die gemäß des erfindungsgemäßen Verfahrens getrocknet werden, sind solche, die in einem Nassdarm-Prozess hergestellt wurden. Beispiele für solche Schlauchhüllen sind Cellulosefaserdarmhüllen, Cellulosedarmhüllen und Collagendarmhüllen.

Das erfindungsgemäße Verfahren sieht typischerweise so aus, dass die zu trocknende Schlauchhülle kontinuierlich in einem integrierten Herstellungs- und Trocknungsprozess nach ihrer Herstellung durch eine Mikrowellenanlage, die zumindest an zwei Seiten offen ist, geführt und dabei getrocknet wird.

Beim Trocknungsbetrieb der Mikrowellenanlage kann die Temperatur innerhalb der Mikrowellenanlage dabei im Bereich zwischen 0 und 200°C, und typischerweise zwischen 20 und 100°C, liegen. Die Trocknung der Schlauchhülle erfolgt dabei primär durch die Mikrowellen. Durch den Betrieb der Mikrowellenanlage bei höheren Temperaturen kann die Trocknung beschleunigt werden. Dabei können höhere Temperaturen passiv durch eine höhere Außentemperatur oder aber aktiv durch Zuheizen erzielt werden.

In einer bevorzugten Ausführungsform des erfindungsgemäßen Verfahrens wird die zu trocknende Schlauchhülle mit einer Geschwindigkeit im Bereich von 0,01 bis 30 Meter pro Sekunde, bevorzugt im Bereich von 0,1 bis 10 Meter pro Sekunde, besonders bevorzugt im Bereich von 0,5 bis 5 Meter pro Sekunde, durch die Mikrowellenanlage geführt.

Bei dem erfindungsgemäßen Verfahren werden die Schlauchhüllen typischerweise bis auf eine Restfeuchte im Bereich von 3 bis 30 %, bevorzugt von 5 bis 20 %, bezogen auf das Gesamtgewicht getrocknet. Die gewünschte Restfeuchte hängt dabei von der Art des Kunstdarms ab, aber auch von dem beabsichtigten Verwendungszweck der Hülle. Die Restfeuchte wird gravimetrisch bestimmt (Trocknen im Trockenschrank bei 105°C).

Die in dem erfindungsgemäßen Verfahren eingesetzte Mikrowellenanlage ist typischerweise so dimensioniert, dass Mikrowellen im Frequenzbereich zwischen 300 und 300.000 MHz, vorzugsweise zwischen 600 und 60.000 MHz, besonders bevorzugt zwischen 900 und 6.000 MHz, erzeugt werden. Die Strahlungsleistung der Mikrowellenanlage kann dabei 1 bis 1000 KW betragen. Typischerweise liegt die Strahlungsleistung jedoch zwischen 1 und 100 KW, bevorzugt zwischen 1 und 30 KW.

Die erfindungsgemäß eingesetzte Mikrowellenanlage kann dabei so betrieben werden, die Mikrowellen in Abhängigkeit der Feuchte vor und nach dem Trocknungsprozess im Dauerbetrieb oder im Impulsbetrieb erzeugt werden. So kann z.B. im Impulsbetrieb mit hoher Mikrowellenleistung eine ähnlich gute Trocknungsleistung erzielt werden wie im Dauerbetrieb mit reduzierter Mikrowellenleistung.

Das erfindungsgemäße Verfahren kann auch so betrieben werden, dass zusätzlich zu der Mikrowellentrocknung eine Vortrocknung und/oder Nachtrocknung der Schlauchhülle durch andere Trocknungsverfahren erfolgt. Solche anderen Verfahren können z.B. Trocknung durch erwärmte Luft oder Trocknung durch Infrarotstrahlung umfassen.

Ebenfalls Gegenstand der vorliegenden Erfindung ist eine integrierte Anlage zum Herstellen und Trocknen von Schlauchhüllen, wobei die Anlage zumindest eine Teilanlage zur Herstellung von Schlauchhüllen und eine Teilanlage zur Trocknung der hergestellten Schlauchhüllen umfasst, dadurch gekennzeichnet, dass die Teilanlage zur Trocknung eine Mikrowellenanlage umfasst.

Wie bei Verfahren zuvor bereits beschrieben, kann auch die Anlage eine Anlage zur Herstellung von beschichteten oder unbeschichteten Nahrungsmittelhüllen sein, wobei es sich bevorzugt um Cellulosefaserdarmhüllen, Cellulosedarmhüllen oder Collagendarmhüllen handelt. Die in der integrierten Anlage eingesetzte Mikrowellenanlage kann dabei ausgeführt sein wie oben näher spezifiziert.

Schließlich ist Gegenstand der vorliegenden Erfindung die Verwendung von Mikrowellen zum Trocknen von Schlauchhüllen, wobei die Erzeugung der Mikrowellen, das Trocknen und die Auswahl der Schlauchhüllen entsprechend den obigen Ausführungen erfolgen kann.

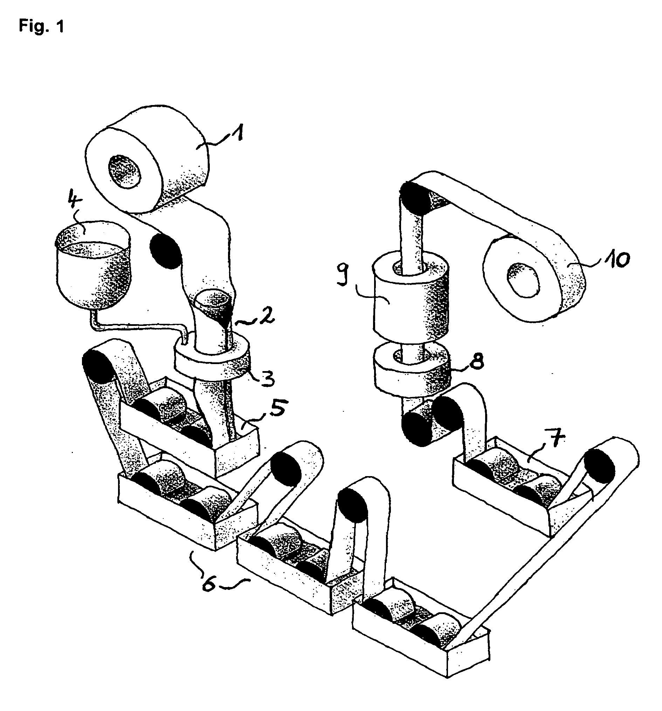

**Figur 1** zeigt die erfindungsgemäße Verwendung einer Mikrowellenanlage zum Trocknen von Schlauchhüllen am Beispiel einer Faserdarmherstellung in einer erfindungsgemäßen integrierten Anlage zum Herstellen und Trocknen von Schlauchhüllen.

Die in **Figur 1** stellvertretend auch für andere erfindungsgemäße Anlagen gezeigte Faserdarmanlage umfasst ein von einer Rolle 1 abwickelbares flächiges Faservlies, welches an einer Schlauchbildungsvorrichtung 2 zu einem Schlauch geformt und anschließend durch eine Viskosierdüse 3 geführt wird, wo durch Einbringen von Viskose 4 ein Faserrohdarm gebildet wird, welcher nach Durchlaufen eines Fällbades 5, mehrerer Waschbäder 6 und Behandlungsbäder 7 einer Imprägnierstation 8 zugeführt wird. Von dort wird der so hergestellte aber noch feuchte Faserdarm durch eine an zwei Seiten offene Mikrowellenanlage 9 zwecks Trocknung geführt. Anschließend wird der getrocknete Faserdarm an der Station 10 aufgewickelt.

### Beispiel

Ein getrockneter Cellulosefaserdarm mit Haftimprägnierung (Walsroder FR) vom Kaliber 60 wurde nach dem erfindungsgemäßen Verfahren bei einer bestimmten Anlagengeschwindigkeit unter Einsatz einer Mikrowellentrocknung hergestellt.

50 cm Abschnitte dieser Hülle wurden mit einem Rohwurstbrät prall gefüllt und fertiggestellt. Nach einer Abreifezeit von 30 Tage traten keine Absteller auf, d.h. die Hülle schrumpfte sehr gut mit.

### Vergleichsbeispiel

Ein Cellulosefaserdarm mit Haftimprägnierung (Walsroder FR) vom Kaliber 60 gemäß obigem Beispiel wurde nach einem üblichen Verfahren und bei der gleichen Anlagengeschwindigkeit wie oben unter Einsatz von Heißluft zur Trocknung bis zur gleichen Restfeuchte wie in obigem Beispiel hergestellt. Um dies zu erreichen, musste die Heißlufttemperatur entsprechend hoch eingestellt werden.

50 cm Abschnitte hieraus wurden mit dem gleichen Rohwurstbrät prall gefüllt und ebenso fertiggestellt. Dabei traten bei der Ware nach 30 Tagen geringe Absteller auf, d.h. die Hülle löste sich etwas von der Wurstmasse.

Darüber hinaus wurde ein geringerer Gewichtsverlust beobachtet als bei der nach dem erfindungsgemäßen Verfahren hergestellten bzw. getrockneten Ware. Der geringere Gewichtsverlust ist ein sicheres Anzeichen für eine Verhornung der Celluloseoberfläche durch übermäßige Hitzeeinwirkung (vgl. "Holzforschung - International Journal of the Biology, Chemistry, Physics and Technology of Wood", Band 33, Heft 2, Seiten 33-35, ISSN (Print) 0018-3830, 1979).

### Bezugszeichenliste

- (1): Faservliesrolle
- (2): Schlauchbildungsvorrichtung
- (3): Viskosierdüse
- (4): Viskosebehälter
- (5): Fällbad
- (6): Waschbäder
- (7): Behandlungsbäder
- (8): Imprägnierstation
- (9): Mikrowellenanlage
- (10): Aufinricklungsstation

## Patentansprüche

1. Verfahren zum Trocknen von Schlauchhüllen, **dadurch gekennzeichnet, dass** eine zu trocknende Schlauchhülle durch eine Mikrowellen erzeugende Mikrowellenanlage geführt wird.

2. Verfahren nach Anspruch 1, wobei die zu trocknende Schlauchhülle eine beschichtete oder unbeschichtete Nahrungsmittelhülle ist, **dadurch gekennzeichnet, dass** entweder eine unbeschichtete feuchte Nahrungsmittelhülle, eine feuchte Beschichtung einer an sich nicht feuchten Nahrungsmittelhülle oder eine mit einer feuchten Beschichtung versehenen feuchten Nahrungsmittelhülle durch die Mikrowellen der Mikrowellenanlage getrocknet wird.

3. Verfahren nach Anspruch 1 oder 2, **dadurch gekennzeichnet, dass** die Schlauchhülle in einem Nassdarm-Prozess hergestellt wurde und vorzugsweise ausgewählt ist aus Cellulosefaserdarm, Cellulosedarm und Collagendarm.

4. Verfahren nach einem der vorherigen Ansprüche, **dadurch gekennzeichnet, dass** die zu trocknende Schlauchhülle kontinuierlich in einem integrierten Herstellungs- und Trocknungsprozess nach ihrer Herstellung durch die Mikrowellenanlage, die zumindest an zwei Seiten offen ist, geführt und dabei getrocknet wird.

5. Verfahren nach einem der vorherigen Ansprüche, **dadurch gekennzeichnet, dass** die Trocknung innerhalb der betriebenen Mikrowellenanlage bei einer Temperatur im Bereich zwischen 0 und 200°C, bevorzugt zwischen 20 und 100°C, erfolgt.

6. Verfahren nach einem der vorherigen Ansprüche, **dadurch gekennzeichnet, dass** die zu trocknende Schlauchhülle mit einer Geschwindigkeit im Bereich von 0,01 bis 30 Meter pro Sekunde, bevorzugt im Bereich von 0,5 bis 5 Meter pro Sekunde, durch die Mikrowellenanlage geführt wird.

7. Verfahren nach einem der vorherigen Ansprüche, **dadurch gekennzeichnet, dass** die Schlauchhülle bis auf eine Restfeuchte im Bereich von von 3 bis 30 %, bevorzugt von 5 bis 20 %, getrocknet wird.

8. Verfahren nach einem der vorherigen Ansprüche, **dadurch gekennzeichnet, dass** die Mikrowellenanlage Mikrowellen im Frequenzbereich zwischen 300 und 300.000 MHz, vorzugsweise zwischen 600 und 60.000 MHz, besonders bevorzugt zwischen 900 und 6.000 MHz, erzeugt.

9. Verfahren nach einem der vorherigen Ansprüche, **dadurch gekennzeichnet, dass** die Mikrowellen im Dauerbetrieb oder im Impulsbetrieb erzeugt werden.

10. Verfahren nach einem der vorherigen Ansprüche, **dadurch gekennzeichnet, dass** die Strahlungsleistung der Mikrowellenanlage zwischen 1 und 1000 KW, bevorzugt zwischen 1 und 30 KW beträgt.

11. Verfahren nach einem der vorherigen Ansprüche, **dadurch gekennzeichnet, dass** zusätzlich zu der Mikrowellentrocknung eine Vortrocknung und/oder Nachtrocknung der Schlauchhülle durch andere Trocknungsverfahren erfolgt.

12. Integrierte Anlage zum Herstellen und Trocknen von Schlauchhüllen zumindest umfassend eine Teilanlage zur Herstellung von Schlauchhüllen und eine Teilanlage zur Trocknung der hergestellten Schlauchhüllen, **dadurch gekennzeichnet, dass** die Teilanlage zur Trocknung eine Mikrowellenanlage umfasst.

13. Anlage nach Anspruch 12, **dadurch gekennzeichnet, dass** die Anlage eine Anlage zur Herstellung von beschichteten oder unbeschichteten Nahrungsmittelhüllen ist, wobei es sich bei den Nahrungsmittelhüllen bevorzugt um Cellulosefaserdarmhüllen, Cellulosedarmhüllen oder Collagendarmhüllen handelt.

14. Anlage nach Anspruch 12 oder 13, **dadurch gekennzeichnet, dass** die Mikrowellenanlage gemäß einem der Ansprüche 8 bis 10 spezifiziert ist.

15. Verwendung von Mikrowellen zum Trocknen von Schlauchhüllen.

16. Verwendung nach Anspruch 16, **dadurch gekennzeichnet, dass** die Erzeugung der Mikrowellen, das Trocknen und die Auswahl der Schlauchhüllen entsprechend den Ansprüchen 1 bis 10 erfolgt.
